# NEUE EUROPÄISCHE PATENTSCHRIFT

(11) **EP 1 704 342 B2**
(45) Veröffentlichungstag und Bekanntmachung des Hinweises auf die Entscheidung über den Einspruch: **26.10.2011**
(45) Hinweis auf die Patenterteilung: 09.05.2007
(21) Anmeldenummer: 05700006.9
(22) Anmeldetag: 14.01.2005
(51) Int. Cl.: F16D 23/06

(54) **SYNCHRONISIEREINRICHTUNG FÜR EIN ZAHNRADWECHSELGETRIEBE**
SYNCHRONIZING DEVICE FOR A GEAR TRANSMISSION
DISPOSITIF DE SYNCHRONISATION D'UNE BOITE DE VITESSES A ROUES DENTEES

(30) Priorität: 15.01.2004 AT 432004
(43) Veröffentlichungstag der Anmeldung: 27.09.2006
(73) Patentinhaber: Miba Sinter Austria GmbH, 4663 Laakirchen (AT)
(72) Erfinder: STÖCKL, Friedrich, A-4655 Vorchdorf (AT); AMMER, Karl, A-4655 Vorchdorf (AT); NELBÖCK, Günter, A-4863 Seewalchen (AT)
(74) Vertreter: Hübscher, Helmut
(86) Internationale Anmeldenummer: PCT/AT2005/000005
(87) Internationale Veröffentlichungsnummer: WO 2005/068866

(56) Entgegenhaltungen:
- EP-A- 1 312 823
- DE-A1- 3 225 364
- DE-A1- 3 808 460
- DE-A1- 10 163 828
- DE-A1- 19 718 905
- DE-B4- 19 853 894

## Beschreibung

### Technisches Gebiet

Die Erfindung bezieht sich auf eine Synchronisiereinrichtung für ein Zahnradwechselgetriebe mit wenigstens einer Konuskupplung, die einen gegenüber einer Nabe frei drehbaren Doppelkonusring zwischen einem inneren Reibring und einem äußeren gegenüber dem Reibring axial verschiebbaren Synchronring aufweist, der einen Ringkörper mit einer Sperrverzahnung am Außenumfang und mit einer Reibfläche am Innenumfang sowie radial einwärts gerichtete Mitnehmer für den Reibring besitzt.

### Stand der Technik

Bei Zahnradwechselgetrieben mit einer drehfest auf einer Welle sitzenden Nabe und einem auf der Welle freidrehbar gelagerten Gangrad ist es bekannt (DE 42 24 271 A1), zwischen der Nabe und dem Gangrad eine Synchronisiereinrichtung mit einer Konuskupplung vorzusehen, die einen eine Drehmitnahme des Gangrades bewirkenden Doppelkonusring aufweist, der zwischen einem inneren Reibring und einem durch die Schiebemuffe gegenüber diesem Reibring axial verstellbaren, der Nabe zugeordneten Synchronring kraftschlüssig eingespannt wird. Wird die Schiebemuffe auf der Nabe im Sinne eines Kupplungseingriffes verschoben, so wird durch die axiale Mitnahme des Synchronringes der Doppelkonusring reibschlüssig zwischen dem inneren Reibring und dem äußeren Synchronring und damit das mit dem Doppelkonusring drehfest verbundene Gangrad auf die Umlaufgeschwindigkeit der Nabe beschleunigt, was den anschließenden, unbehinderten Kupplungseingriff zwischen der Schiebemuffe und dem Klauenkranz des Gangrades ermöglicht. Eine am Synchronring angeordnete, mit den Klauen der Schiebemuffe zusammenwirkende Sperrverzahnung verhindert dabei, daß die Schiebemuffe während der Synchronisierung die axiale Kupplungsbewegung ausführen kann.

Zur Drehmitnahme des Reibringes durch den Synchronring weist dieser radial einwärts gerichtete Mitnehmer auf, die gegenüber dem Reibring drehfest, aber axial verschiebbar abgestützt sind. Die Mitnehmer werden daher Belastungen ausgesetzt, die entsprechende Anforderungen an die Werkstoffeigenschaften stellen, zumal aufgrund der gedrängten Platzverhältnisse die Mitnehmer nur vergleichsweise geringe Wanddicken aufweisen dürfen. Aus diesem Grunde verbietet sich eine pulvermetallurgische Herstellung der Synchronringe, obwohl eine solche pulvermetallurgische Herstellung erhebliche Fertigungsvorteile mit sich bringt. Dazu kommt noch, daß die Mitnehmer die Ölverdrängung aus den Spalten zwischen dem Doppelkonusring einerseits und der Reibfläche des Synchronringes sowie des Reibringes anderseits behindern. Eine weitere Synchronsiereinrichtung gemäß dem Oberbegriff des Anspruchs 1 ist aus EP 1 312 823 bekannt.

### Darstellung der Erfindung

Der Erfindung liegt somit die Aufgabe zugrunde, eine Synchronisiereinrichtung der eingangs geschilderten Art so auszugestalten, daß einfache Fertigungsbedingungen sichergestellt werden können, ohne eine Überbeanspruchung der Konstruktionsteile befürchten zu müssen.

Die Erfindung löst die gestellte Aufgabe dadurch, dass die Mitnehmer an einem Mitnehmerring aus wenigstens einem Blechzuschnitt vorgesehen sind, der mit dem aus einem Sinterkörper bestehenden Ringkörper verbunden ist, und dass der Mitnehmerring unter Freilassung von über den Umfang verteilten radialen Spalten mit dem Ringkörper verbunden ist.

Da die Mitnehmer des Synchronringes an einem von dessen Ringkörper gesonderten Mitnehmerring vorgesehen werden, wird die einfache Voraussetzung geschaffen, den Ringkörper pulvermetallurgisch als Sinterkörper zu fertigen, ohne eine Überlastung der Mitnehmer befürchten zu müssen, die ja an einem Mitnehmerring aus wenigstens einem Blechzuschnitt vorgesehen sind. Es brauchen daher lediglich der Mitnehmerring und der Ringkörper nach ihrer gesonderten Herstellung miteinander verbunden zu werden, wobei es nicht auf eine besondere Fügetechnik ankommt, wenn nur eine entsprechende Kraftübertragung zwischen Ringkörper und Mitnehmerring gewährleistet ist. Die Zuordnung der Mitnehmer zu einem gesonderten Mitnehmerring stellt außerdem eine vorteilhafte Voraussetzung dafür dar, dass der Mitnehmerring unter Freilassung von über den Umfang verteilten, radialen Spalten zwischen Mitnehmerring und Ringkörper verbunden wird, was die Ölverdrängung zwischen Reibring und Doppelkonus bzw. Reibring und Synchronring auf der Seite der Mitnehmer erleichtert und zu einer verbesserten Kühlung über die Ölströmung durch diese Spalte führt.

Um eine bestimmte Spaltweite konstruktiv vorzugeben, kann der Ringkörper oder der Mitnehmerring die Spaltweite bestimmende Verbindungsansätze aufweisen, die nicht nur Verbindungsflächen zur Verfügung stellen, sondern auch als Abstandhalter dienen.

Es hat sich in überraschender Weise herausgestellt, daß bereits vergleichsweise kleine Spaltweiten eine merkliche Verbesserung der Ölverdrängung mit sich bringen. Es kann daher unter Umständen auf gesonderte Verbindungsansätze verzichtet werden, wenn die Spaltweite der Dicke einer lediglich in Umfangsabschnitten vorgesehenen Haftvermittlungsschicht, beispielsweise einer Klebe-oder Lötschicht, entspricht.

### Kurze Beschreibung der Zeichnung

In der Zeichnung ist der Erfindungsgegenstand beispielsweise dargestellt. Es zeigen
- Fig. 1: eine erfindungsgemäße Synchronisiereinrichtung für ein Zahnradwech- selgetriebe ausschnittsweise in einem vereinfachten Axialschnitt,
- Fig. 2: den Synchronring der Konuskupplung dieser Synchronisiereinrichtung in einer stirnseitigen Ansicht auf den Mitnehmerring und
- Fig. 3: einen Schnitt nach der Linie III-III der Fig. 2 in einem größeren Maßstab. >

### Weg zur Ausführung der Erfindung

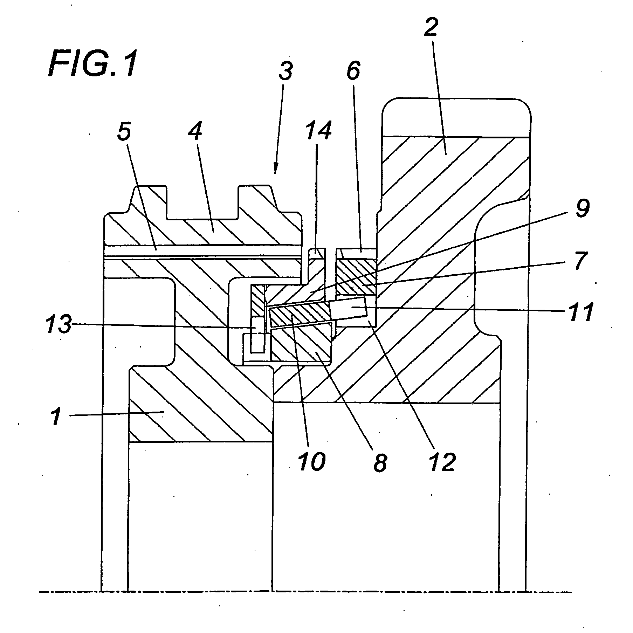

Gemäß der Fig. 1 ist zwischen einer drehfest auf einer Welle sitzenden Nabe 1 und einem freidrehbar auf dieser Welle gelagerten Gangrad 2 eines Zahnradwechselgetriebes eine Klauenkupplung 3 vorgesehen, die eine auf der Nabe 1 axial verschiebbar gelagerte Schiebemuffe 4 aufweist, die mit ihrer inneren Klauenverzahnung 5 mit einem Klauenkranz 6 eines Kupplungskörpers 7 des Gangrades 2 zusammenwirkt. Um die Klauenkupplung 3 nur dann betätigen zu können, wenn die Drehzahl der Nabe 1 mit der des Gangrades 2 übereinstimmt, ist eine Synchronisiereinrichtung vorgesehen, die einen inneren Reibring 8, einen äußeren Synchronring 9 und einen Doppelkonusring 10 umfaßt. Während die Reib- und Synchronringe 8, 9 der Nabe 1 zugeordnet sind, ist der Doppelkonusring 10 über Mitnehmer 11, die in entsprechende Aufnahmen 12 des Kupplungskörpers 7 eingreifen, drehfest mit dem Gangrad 2 verbunden. Der Synchronring 9, der mit dem Reibring 8 und dem Doppelkonusring 10 eine Konuskupplung bildet, ist gegenüber dem Reibring 8 axial verschiebbar gelagert und mit dem Reibring 8 über Mitnehmer 13 zur Drehmitnahme gekoppelt.

Um sicherzustellen, daß die Schiebemuffe 4 erst nach einer Synchronisation der Drehzahlen der Nabe 1 und des Gangrades 2 in Eingriff mit dem Klauenkranz 6 des Kupplungskörpers 7 gebracht werden kann, ist der gegenüber der Schiebemuffe 4 begrenzt verdrehbare Synchronring 9 mit einer Sperrverzahnung 14 versehen, die mit der Klauenverzahnung 5 der Schiebemuffe 4 zusammenwirkt. Wird die Schiebemuffe 4 aus ihrer gezeichneten Mittelstellung gegen das Gangrad 2 verschoben, so werden in herkömmlicher Weise über den Umfang der Nabe 1 verteilte, über eine Federrast mit der Schiebemuffe 4 gekoppelte Druckstücke an den Synchronring 9 axial angedrückt, so daß zwischen dem Synchronring 9 und dem Reibring 8 einerseits sowie dem Doppelkonusring 10 anderseits eine reibschlüssige Verbindung mit der Wirkung hergestellt wird, daß Drehzahlunterschiede zwischen dem Synchronring 9 und dem Gangrad 2 ausgeglichen werden. Da bei dieser Synchronisation die Stirnflächen der Klauenverzahnung 5 der Schiebemuffe 4 an die Sperrverzahnung 14 angedrückt werden, ist ein Durchgriff der Klauenverzahnung 5 auf den Klauenkranz 6 des Kupplungskörpers 7 gesperrt. Erst nach der durch den Gleichlauf bewirkten Verringerung des Reibmomentes kann das durch die Dachschrägen der aneinanderliegenden Stirnflächen der Klauenverzahnung 5 und der Sperrverzahnung 14 im Zusammenwirken mit der axialen Stellkraft der Schiebemuffe 4 bedingte Drehmoment zur gegenseitigen Verdrehung von Synchronring 9 und Schiebemuffe 4 ausgenützt werden, um die Klauenverzahnung 5 der Schiebemuffe 4 an der Sperrverzahnung 14 des Synchronringes 9 vorbei in den Klauenkranz 6 des Kupplungskörpers 7 einzuführen.

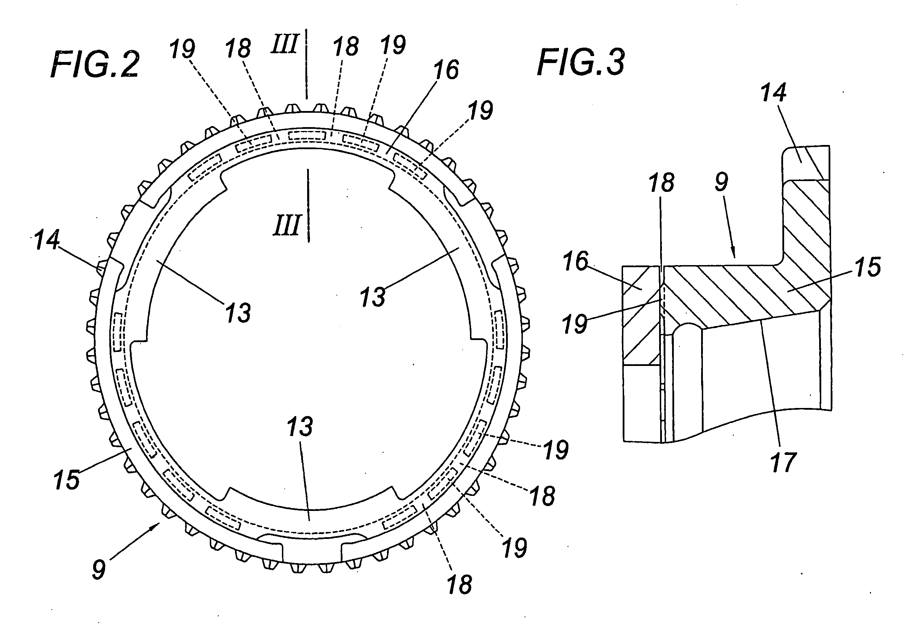

Wie den Fig. 2 und 3 zu entnehmen ist, ist der Synchronring 9 aus einem Ringkörper 15 und einem die Mitnehmer 13 bildenden Mitnehmerring 16 gefügt. Diese Trennung zwischen dem Ringkörper 16 und den einem gesonderten Mitnehmerring 16 zugehörigen Mitnehmern 13 erlaubt es in vorteilhafter Weise, den Ringkörper 15 pulvermetallurgisch als Sinterkörper herzustellen, während der Mitnehmerring 16 mit den Mitnehmern 13 aus einem Blechzuschnitt besteht. Damit können die Vorteile der pulvermetallurgischen Herstellung des Ringkörpers 15 genützt werden, ohne eine Überlastung der Mitnehmer 13 befürchten zu müssen, die ja zu einem Mitnehmerring 16 aus einem Blechzuschnitt verbunden sind. Es braucht lediglich für eine entsprechende Verbindung zwischen dem Ringkörper 15 und dem Mitnehmerring 16 gesorgt zu werden, wofür sowohl formschlüssige als stoffschlüssige Verbindungen eingesetzt werden können. Gemäß der Fig. 3 bildet der Ringkörper 15 sowohl die Sperrverzahnung 14 als auch die mit dem Doppelkonus 10 zusammenwirkende, konische Reibfläche 17. Dies ist jedoch nicht zwingend. So könnte die Sperrverzahnung 14 als gesonderter Zahnkranz aus einem Blechprägeteil gefertigt und mit dem Ringkörper 15 verbunden werden. Die Reibfläche 17 könnte aus einer auf den Ringkörper 15 aufgebrachten Reibschicht unterschiedlichen Aufbaus bestehen.

Die getrennte Fertigung des Ringkörpers 15 und des Mitnehmerringes16 bildet außerdem eine vorteilhafte Voraussetzung für eine einfache Ausbildung von radialen Spalten 18 zwischen dem Mitnehmerring 16 und dem Ringkörper 15.

Diese Spalte, die eine Spaltweite vorzugsweise zwischen 0,2 und 1 mm aufweisen, begünstigen die rasche Ölverdrängung aus dem Spaltbereich zwischen dem Doppelkonusring 10 einerseits und dem Reibring 8 sowie dem Synchronring 9 anderseits. Außerdem ergibt sich mit dem Ölstrom durch die Spalte 18 eine verbesserte Kühlung. Das Öl wird ja aufgrund der Fliehkräfte radial nach außen gedrängt.

Um eine bestimmte Spaltweite konstruktiv vorzugeben, weist im Ausführungsbeispiel der Ringkörper 15 gegen den Mitnehmerring 16 vorstehende Verbindungsansätze 19 auf, die nicht nur zur Verbindung von Ringkörper 15 und Mitnehmerring 16 dienen, sondern auch Abstandhalter darstellen, wie dies der Fig. 3 entnommen werden kann. Für kleine Spaltweiten kann es durchaus genügen, die zwischen dem Ringkörper 15 und dem Mitnehmerring 16 vorgesehene Haftvermittlungsschicht, beispielsweise eine Klebe- oder Lötschicht, als Abstandhalter zu nützen. Die Haftvermittlungsschicht darf selbstverständlich nur in Umfangsbereichen vorgesehen werden, um die radiale Spalte 18 zwischen den Bereichen der Haftvermittlungsschicht sicherzustellen.

Die Erfindung ist selbstverständlich nicht auf das dargestellte Ausführungsbeispiel beschränkt. So könnte der Mitnehmerring auch aus zwei oder mehreren Zuschnitten segmentartig zusammengesetzt werden.

## Patentansprüche

1. Synchronisiereinrichtung für ein Zahnradwechselgetriebe mit wenigstens einer Konuskupplung, die einen gegenüber einer Nabe (1) frei drehbaren Doppelkonusring (10) zwischen einem inneren Reibring (8) und einem äußeren gegenüber dem Reibring (8) axial verschiebbaren Synchronring (9) aufweist, der eInen Ringkörper (15) mit einer Sperrverzahnung (14) am Außenumfang und mit einer Reibfläche (17) am Innenumfang sowie radial einwärts gerichtete Mitnehmer (13) für den Reibring (8) besitzt, **dadurch gekennzeichnet, daß** die Mitnehmer (13) an einem Mitnehmerring (16) aus wenigstens einem Blechzuschnitt vorgesehen sind, der mit dem aus einem Sinterkörper bestehenden Ringkörper (15) verbunden ist, und daß der Mitnehmerring (16) unter Freilassung von über den Umfang verteilten radialen Spalten (18) mit dem Ringkörper (15) verbunden ist.

2. Synchronisiereinrichtung nach Anspruch 1, **dadurch gekennzeichnet, daß** der Ringkörper (15) oder der Mitnehmerring (16) die Spaltweite bestimmende Verbindungsansätze (19) aufweist.

3. Synchronisiereinrichtung nach Anspruch 1 oder 2, **dadurch gekennzeichnet, daß** die Spaltweite einer Dicke einer lediglich in Umfangsabschnitten vorgesehenen Haftvermittlungsschicht entspricht

## Claims

1. Synchronising device for a straight-toothed gearbox with at least one conical clutch which comprises a double conical ring (10) which can be freely rotated in relation to a hub (1) between an inner friction ring (8) and an outer synchronising ring (9) which is axially displaceable in relation to the friction ring (8) and has an annular body (15) with locking toothing (14) on the outer periphery and with a friction surface (17) on the inner periphery and also radially inwardly oriented driving elements (13) for the friction ring (8), **characterised in that** the driving elements (13) are provided on a driving element ring (16) of at least one sheet section which is connected to the annular body (15) consisting of a sintered body, and **in that** the driving element ring (16) is connected to the annular body (15), leaving free radial gaps (18) distributed around the periphery.

2. Synchronising device according to Claim 1, **characterised in that** the annular body (15) of the driving element ring (16) comprises connection elements (19) determining the gap width.

3. Synchronising device according to Claim 1 or 2, **characterised in that** the gap width corresponds to a thickness of an adhesive layer provided only in peripheral sections.

## Revendications

1. Dispositif de synchronisation pour une boîte de vitesse à roues dentées, comprenant au moins un accouplement à cône, présentant une bague à cône double (10) susceptible de tourner librement par rapport à un moyeu (1) entre une bague de friction (8) et une bague de synchronisation (9) extérieure, déplaçable axialement par rapport à la bague de friction, la bague de synchronisation comprenant un corps annulaire (15), avec une denture de blocage (14) sur la périphérie extérieure et avec une surface de friction (17) sur la périphérie intérieure, ainsi que des organes d'entraînement (13) orientés radialement vers l'intérieur, pour la bague de friction, **caractérisé en ce que** les organes d'entraînement (13) sont prévus sur une bague formant organe d'entraînement (16), formée d'au moins un flanc en tôle, relié au corps annulaire (15) composé d'un corps fritté, et que la bague formant organe d'entraînement (16) est reliée au corps annulaire (15) en laissant libres des intervalles (18) radiaux, répartis sur la périphérie.

2. Dispositif de synchronisation selon la revendication 1, **caractérisé en ce que** le corps annulaire (15) ou la bague formant organe d'entraînement (16) présente des appendices de liaison (19), déterminant la largeur de l'intervalle.

3. Dispositif de synchronisation selon la revendication 1 ou 2, **caractérisé en ce que** la largeur d'intervalle correspond à une épaisseur d'une couche d'adhésion, prévue uniquement dans des tronçons périphériques.
